# DEMANDE DE BREVET EUROPEEN

(11) **EP 1 166 623 A1**
(43) Date de publication de la demande: **02.01.2002**
(21) Numéro de dépôt: 01440186.3
(22) Date de dépôt: 21.06.2001
(51) Int. Cl.: A01G 17/08

(54) **Dispositif d'accrochage sur un piquet en bois de fils de palissage**

(30) Priorité: 21.06.2000 FR 0007909
(71) Demandeur: S.C.D.C. Société Anonyme, 51270 Orbais (FR)
(72) Inventeur: Casters, Denis, 51270 Mareuil en Brie (FR); Sigonneau, Pierre, 86120 Les trois Moutiers (FR)
(74) Mandataire: Rhein, Alain

(57) **Abrégé**

L'invention concerne un dispositif d'accrochage de fils de palissage sur un piquet en bois, du type destiné à être solidarisé au piquet (5) par enfoncement dans ce dernier d'un élément (6), et qui est apte à immobiliser un fil fixe (51) et à retenir de manière réversible un fil releveur (52).

Il se présente sous la forme d'une pièce (1) allongée plate destinée à être assujettie longitudinalement et à plat au piquet (5) à l'aide de l'élément (6), et qui comporte d'une part dans sa région médiane (2) une face plane (21) destinée à venir au contact du piquet (5), d'autre part inférieurement un moyen (30) apte à immobiliser, en coopération avec la surface (50) du piquet (5), le fil fixe (51), et d'autre part encore supérieurement un moyen (40) apte à retenir de manière réversible, en coopération avec ladite surface (50) du piquet (5), le fil releveur (52).

## Description

La présente invention a pour objet, dans le domaine de la viticulture notamment, un dispositif d'accrochage de fils de palissage sur un piquet en bois.

Le dispositif selon de l'invention est particulièrement adapté à la technique de palissage de la vigne, mais il peut également être utilisé dans d'autres domaines tels que l'arboriculture et l'horticulture par exemple.

La technique de palissage est utilisée pour orienter dans la direction voulue la pousse de la végétation d'une plante telle que la vigne, c'est-à-dire que l'on attache ladite végétation à des fils tendus sur des piquets. Le palissage a également pour but d'empêcher la végétation fraîchement poussée de s'étaler dans les routes de vignes, entre deux rangs, ce qui peut entraver le passage des viticulteurs et surtout des engins permettant le traitement de la vigne.

Un rang de vigne comporte des piquets alignés et régulièrement espacés sur lesquels passent et sont solidarisés, par des moyens appropriés, des fils. Les fils sont tendus entre les deux piquets extrêmes appelés piquets de tête par opposition aux piquets intermédiaires appelés piquets de rang.

Un rang de vigne comporte plusieurs fils tendus à des hauteurs différentes entre les piquets de tête et accrochés aux piquets de rang, et qui sont destinés à servir de support à la végétation qui lui est attachée lors de l'opération dite de liage.

Un rang de vigne comporte de plus dans sa partie supérieure, deux fils disposés côte à côte, dont l'un au moins est apte à être décroché des piquets de rang, ce ou ces fils, appelés fils releveurs ou fils balans, sont destinés à enserrer la partie haute de la végétation, la possibilité de désolidariser au moins l'un d'eux des piquets de rang facilitant l'introduction de la végétation entre eux. Après accrochage du ou des fils releveurs aux piquets, leur rapprochement est complété par des moyens de fixation amovibles tels que des agrafes.

Actuellement sont utilisés deux types de piquets, les piquets en bois du type poteau, et les piquets métalliques. Il existe de nombreux modèles de piquets métalliques, ils comportent tous, de fabrication, des moyens permettant la solidarisation des fils de palissage, qui se présentent soit sous la forme de trous, de fentes, de languettes etc.

En ce qui concerne les piquets en bois, la solidarisation des fils de palissage est réalisée à l'aide de dispositifs d'accrochage rapportés du type clous ou crampillons, ou bien des dispositifs plus élaborés tels que ceux décrits dans le document FR 2.700.368 au nom de la Demanderesse, et qui comportent un élément pointu destiné à être enfoncé dans le piquet, associé à un élément d'enserrement d'un fil de palissage.

Tous ces dispositifs présentent des inconvénients, dont le principal est celui d'être destiné uniquement à la fixation d'un fil fixe, ou d'un fil fixe, sans possibilité d'accrochage d'un fil fixe et d'un fil releveur. En outre, l'opération d'assujettissement au piquet en bois est malaisée et peut être fastidieuse.

Par ailleurs, la fixation dans le bois est limitée dans le temps, les fibres bois étant susceptibles à la longue de s'écarter autour de l'élément qui y est enfoncé, qui alors n'est plus maintenu. De manière générale, les dispositifs de fixation fixés par enfoncement d'une de leur partie dans le bois, ont tendance à faire éclater ce dernier.

On connaît déjà par le document EP 1.065.333 un dispositif pour la fixation de fils, notamment d'un fil fixe et d'un fil releveur, qui est destiné à être solidarisé à un piquet en bois au moyen d'au moins un moyen de fixation. Ce document propose deux modes de réalisation d'un tel moyen de fixation.

L'un d'eux consiste en un élément apte à être enfoncé dans le piquet et qui comporte un moyen de retenue, de manière réversible, d'un fil releveur se présentant sous la forme d'un crochet, ainsi qu'un moyen apte à immobiliser le fil fixe, qui consiste en un trou dans lequel est enfilé ledit fil fixe, ce qui est peu pratique du point de vue mise en oeuvre, notamment lorsqu'il s'agit de remplacer un ou plusieurs de ces éléments.

Le document EP 1.065.333 propose un autre mode de réalisation, qui comporte un moyen apte, en coopération avec la surface du piquet, à immobiliser un fil fixe, ainsi qu'un crochet permettant d'immobiliser de manière réversible un fil releveur.

Ce dispositif présente comme principal inconvénient, de favoriser l'écartement des fibres de bois, pour éventuellement aller jusqu'à l'éclatement. En effet, il comporte deux éléments superposés destinés à être enfoncés dans le bois, alors que les fibres s'étendent bien entendu dans le sens longitudinal.

De plus, le moyen apte, en coopération avec la surface du piquet, à immobiliser le fil fixe, consiste en une échancrure formée par l'écartement des deux éléments destinés à être enfoncés dans le piquet. Or, il est difficile de toujours doser la force que l'on applique pour enfoncer un tel dispositif de la profondeur adéquate, et il est fréquent d'aller au-delà de cette profondeur avec le risque d'endommager le fil voire de le sectionner. Le dispositif comporte bien des butées susceptibles de constituer une limite d'enfoncement, toutefois ce dispositif est fabriqué au moyen d'une plaque d'épaisseur sensiblement constante, en sorte que, comme vu précédemment, l'enfoncement des éléments d'accrochage tend à écarter les fibres voire à éclater le bois, lesdites butées, qui sont de la même épaisseur, sont alors inopérantes.

La présente invention a pour but de proposer un dispositif d'accrochage de fils de palissage sur un piquet en bois permettant de remédier à ces divers inconvénients, et permettant notamment de fournir une fixation durable.

Le dispositif d'accrochage de fils de palissage sur un piquet en bois objet de la présente invention est du type destiné à être solidarisé audit piquet par enfoncement dans ce dernier d'un élément, et qui est apte à immobiliser un fil fixe et à retenir de manière réversible un fil releveur, et il se caractérise essentiellement en ce qu'il se présente sous la forme d'une pièce allongée plate destinée à être assujettie longitudinalement et à plat audit piquet à l'aide dudit élément apte à être enfoncé dans ledit piquet, et qui comporte d'une part dans sa région médiane une face plane destinée à venir au contact dudit piquet, d'autre part inférieurement un moyen apte à immobiliser, en coopération avec la surface dudit piquet, ledit fil fixe, et d'autre part encore supérieurement un moyen apte à retenir de manière réversible, en coopération avec ladite surface dudit piquet, ledit fil releveur.

Le dispositif selon l'invention permet d'accrocher l'un au-dessus de l'autre, un fil fixe et un fil releveur. Du fait que les immobilisations desdits fils sont réalisées en coopération avec la surface du piquet, la mise en place du dispositif selon l'invention est aisée.

Selon une caractéristique additionnelle du dispositif selon l'invention, le moyen apte, en coopération avec la surface du piquet, à immobiliser un fil fixe, consiste en une cavité prévue apte à être fermée par ladite surface lors de l'application de la pièce allongée contre ledit piquet.

Selon une autre caractéristique additionnelle du dispositif selon l'invention, le moyen apte, en coopération avec la surface du piquet, à immobiliser de manière réversible un fil releveur, consiste en une cavité prévue apte à être fermée partiellement par ladite surface lors de l'application de la pièce allongée contre ledit piquet, de manière à créer un logement ouvert supérieurement.

Selon une autre caractéristique additionnelle du dispositif selon l'invention, il comporte dans sa portion médiane un orifice destiné à permettre le passage de l'élément apte à être enfoncé dans le piquet et qui consiste en une vis ou en un clou.

Selon une autre caractéristique additionnelle du dispositif selon l'invention, il comporte des moyens aptes à en réaliser une pré-solidarisation au piquet.

Selon une autre caractéristique additionnelle du dispositif selon l'invention, les moyens de pré-solidarisation consistent en au moins un élément pointu faisant saillie sensiblement perpendiculairement de la portion médiane, du côté de la face destinée à venir en contact avec le piquet.

Selon une autre caractéristique additionnelle du dispositif selon l'invention, il comporte des moyens de resserrement des fibres du bois autour de l'élément apte à être enfoncé dans le piquet.

Selon un mode de réalisation particulier du dispositif selon l'invention, les moyens de resserrement consistent en deux éléments pointus faisant saillie sensiblement perpendiculairement de la portion médiane plane, du côté de la face destinée à venir en contact avec le piquet, et disposés de part et d'autre de l'orifice destiné à permettre le passage de l'élément apte à être enfoncé dans le piquet.

Les deux éléments pointus tendent à réaliser un resserrement des fibres de bois autour de la vis ou du clou, en sorte que la fixation du dispositif est accrue.

Selon un mode de réalisation préférentiel du dispositif selon l'invention, il consiste en une pièce de métal plate, pliée pour former une portion médiane plane, une portion inférieure pliée en arc de cercle pour former un bossage du côté opposé à ladite face plane et une cavité de l'autre côté, tandis que l'extrémité de ladite portion inférieure déborde ou affleure le plan contenant ladite face plane, et une portion supérieure pliée du côté opposé à ladite face plane en sorte de créer une cavité de ce côté et de manière à rester écartée dudit plan contenant ladite face plane.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :

La figure 1 représente une vue schématique en perspective d'un dispositif d'accrochage de fils de palissage selon l'invention.

La figure 2 représente une vue schématique en coupe selon un plan longitudinal médian du même dispositif mis en place sur un piquet en bois.

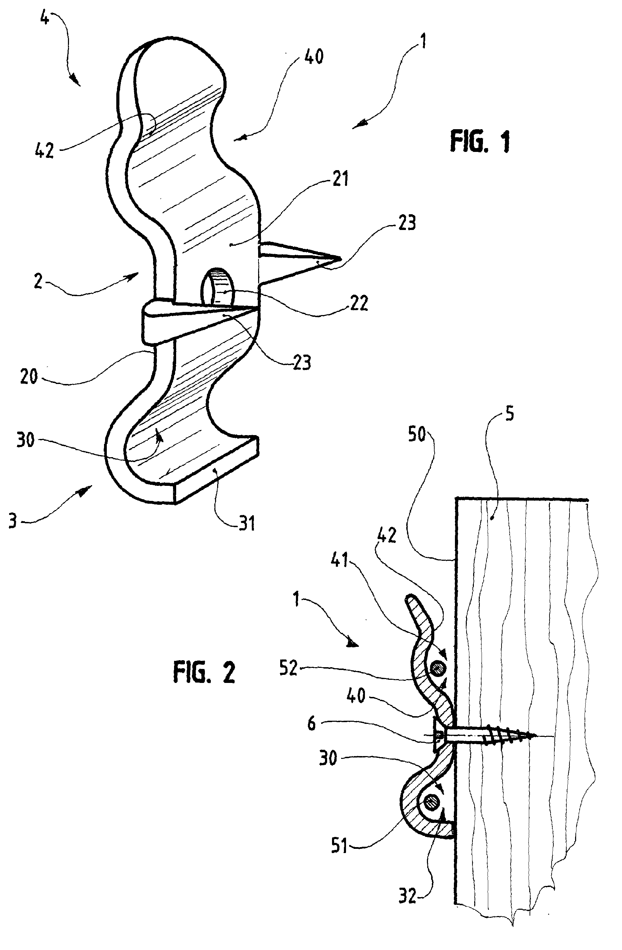

En référence à la figure 1, on peut voir que le dispositif 1 d'accrochage de fils de palissage selon l'invention se présente sous la forme d'une pièce allongée, qui consiste en un fer plat plié.

Ce dispositif 1 comporte une portion médiane 2 plate comportant deux faces 20 et 21, percée d'un trou 22 et bordée de deux éléments pointus 23 qui lui sont perpendiculaires et qui font saillie du côté de la face 21.

Il comporte également une portion inférieure 3 pliée en arc de cercle en sorte de créer un bossage du côté de la face 20 et une cavité 30 du côté de la face 21, l'extrémité 31 de la portion 3 affleurant sensiblement le plan contenant la face 21.

Le dispositif 1 comporte également une portion supérieure 4 également pliée du côté de la face 20, en sorte de créer une cavité 40, et de manière à rester à une certaine distance du plan contenant la face 21.

En référence maintenant à la figure 2, on peut voir le dispositif 1 solidarisé à un poteau en bois 5.

La portion plate 2 est appliquée contre la surface 50 du poteau 5 par sa face 21, et le dispositif est solidarisé au poteau 5 au moyen d'une vis 6, ou bien d'un clou. Au préalable, le dispositif 1 aura été mis en place et fixé provisoirement par enfoncement dans le bois par martèlement des éléments pointus 23, non visibles sur la figure.

Les éléments pointus 23 sont destinés à permettre le positionnement du dispositif 1 et/ou à créer un resserrement des fibres du bois au niveau de la région traversée par la vis 6 ou le clou. Le resserrement des fibres de bois permet un ancrage accru de la vis ou du clou, et autorise une plus grande longévité de la fixation.

Du fait de la forme et de la disposition des portions inférieure 3 et supérieure 4 par rapport à la face 21 qui constitue le plan de référence, la cavité 30 crée avec la surface 50 un logement fermé 32, et la cavité 40 crée avec la même surface 50 un logement 41 ouvert vers le haut.

Le logement 32 est destiné à maintenir un fil fixe 51, engagé sous le dispositif 1 avant sa solidarisation définitive, tandis que le logement 41 est destiné à retenir de manière réversible un fil releveur 52.

On notera que l'extrémité 31 de la portion 3 peut éventuellement légèrement déborder le plan contenant la face 21, afin de pénétrer dans le bois pour garantir la fermeture du logement 41, cette extrémité 31 peut à cet effet présenter un profil acéré.

Par ailleurs, il y a lieu de remarquer que la portion 4 présente une double courbure en sorte de créer du côté de la face 21 un bossage 42 rétenteur du fil releveur 52.

En pratique, l'opérateur place le fil fixe 51 contre le piquet en bois 5, puis il positionne le dispositif 1 en sorte que la cavité 30 recouvre le fil fixe 51, puis enfonce les éléments pointus 23 dans le bois au moyen d'un marteau par exemple, enfin il engage la vis 6 dans le trou 22 et la visse au moyen d'une visseuse électroportative par exemple.

En une seule opération, aisée à réaliser, il est possible de fixer un fil fixe 51 et de créer un logement rétenteur, de manière réversible, d'un fil releveur 52.

## Revendications

1. Dispositif d'accrochage de fils de palissage sur un piquet en bois, du type destiné à être solidarisé audit piquet (5) par enfoncement dans ce dernier d'un élément (6), et qui est apte à immobiliser un fil fixe (51) et à retenir de manière réversible un fil releveur (52), **caractérisé en ce qu'**il se présente sous la forme d'une pièce (1) allongée plate destinée à être assujettie longitudinalement et à plat audit piquet (5) à l'aide dudit élément (6) apte à être enfoncé dans ledit piquet (5), et qui comporte d'une part dans sa région médiane (2) une face plane (21) destinée à venir au contact dudit piquet (5), d'autre part inférieurement un moyen (30) apte à immobiliser, en coopération avec la surface (50) dudit piquet (5), ledit fil fixe (51), et d'autre part encore supérieurement un moyen (40) apte à retenir de manière réversible, en coopération avec ladite surface (50) dudit piquet (5), ledit fil releveur (52).

2. Dispositif selon la revendication 1, **caractérisé en ce que** le moyen (30) apte, en coopération avec la surface (50) du piquet (5), à immobiliser un fil fixe (51), consiste en une cavité prévue apte à être fermée par ladite surface (50) lors de l'application de la pièce allongée (1) contre ledit piquet (5).

3. Dispositif selon la revendication 1 ou la revendication 2, **caractérisé en ce que** le moyen (40) apte, en coopération avec la surface (50) du piquet (5), à immobiliser de manière réversible un fil releveur (52), consiste en une cavité prévue apte à être fermée partiellement par ladite surface (50) lors de l'application de la pièce allongée (1) contre ledit piquet (5), de manière à créer un logement (41) ouvert supérieurement.

4. Dispositif selon l'une quelconque des revendications précédentes, **caractérisé en ce qu'**il comporte dans sa portion médiane (2) un orifice (22) destiné à permettre le passage de l'élément (6) apte à être enfoncé dans le piquet (5) et qui consiste en une vis ou en un clou.

5. Dispositif selon la revendication 4, **caractérisé en ce qu'**il comporte des moyens (23) aptes à en réaliser une pré-solidarisation au piquet (5).

6. Dispositif selon la revendication 5, **caractérisé en ce que** les moyens (23) de pré-solidarisation consistent en au moins un élément pointu faisant saillie sensiblement perpendiculairement de la portion médiane (2), du côté de la face (21) destinée à venir en contact avec le piquet (5).

7. Dispositif selon l'une quelconque des revendications 4 à 6, **caractérisé en ce qu'**il comporte des moyens (23) aptes à réaliser le resserrement des fibres du bois autour de l'élément (6) apte à être enfoncé dans le piquet (5).

8. Dispositif selon la revendication 7, **caractérisé en ce que** les moyens de resserrement consistent en deux éléments pointus (23) faisant saillie sensiblement perpendiculairement de la portion médiane (20), du côté de la face (21) destinée à venir en contact avec le piquet (5), et disposés de part et d'autre de l'orifice (22) destiné à permettre le passage de la vis (6) ou du clou.

9. Dispositif selon l'une quelconque des revendications précédentes, **caractérisé en ce qu'**il consiste en une pièce de métal pliée pour former une portion médiane plane (2) destinée à venir au contact du piquet (5), une portion inférieure (3) pliée en arc de cercle pour former un bossage du côté opposé à la face plane (21) et une cavité (30) de l'autre côté, tandis que l'extrémité (31) de ladite portion inférieure (3) déborde ou affleure le plan contenant ladite face plane (21), et une portion supérieure (4) pliée du côté opposé à ladite face plane (21) en sorte de créer une cavité (40) de ce côté et de manière à rester écartée dudit plan contenant ladite face plane (21).
